# DEMANDE DE BREVET EUROPEEN

(11) **EP 0 693 504 A1**
(43) Date de publication de la demande: **24.01.1996**
(21) Numéro de dépôt: 95401520.2
(22) Date de dépôt: 27.06.1995
(51) Int. Cl.: C08F 20/24

(54) **Procédé de fabrication d'émulsions aqueuses de copolymères fluorés**

(30) Priorité: 22.07.1994 FR 9409096
(71) Demandeur: ELF ATOCHEM S.A., F-92800 Puteaux (FR)
(72) Inventeur: Lina, Marie-José, F-69005 Lyon (FR)
(74) Mandataire: Leboulenger, Jean

(57) **Abrégé**

Pour la préparation d'émulsions aqueuses de copolymères à base de monomères acryliques polyfluorés et de monomères non fluorés par copolymérisation en émulsion aqueuse en présence d'un solvant organique, on utilise comme solvant organique un éther de propylène glycol de formule : 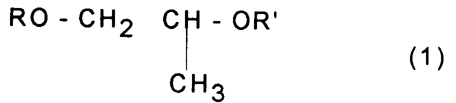
dans laquelle R représente un radical alkyle, linéaire ou ramifié, contenant de 1 à 4 atomes de carbone et R' représente un atome d'hydrogène ou un radical acyle contenant de 2 à 4 atomes de carbone.

## Description

La présente invention concerne la préparation d'émulsions aqueuses de copolymères fluorés destinées au traitement hydrophobe et oléophobe de différents substrats tels que textiles, cuirs et papiers.

Les copolymères fluorés utilisables à cet effet sont généralement préparés par copolymérisation en émulsion aqueuse d'au moins un monomère acrylique polyfluoré et d'au moins un monomère non fluoré, le plus souvent un acrylate ou méthacrylate d'alkyle.

En raison des propriétés particulières des monomères acryliques polyfluorés, leur mise en oeuvre pour obtenir une émulsion aqueuse destinée au traitement hydrophobe et oléophobe nécessite l'emploi d'un solvant organique hydrosoluble. Celui-ci doit être un bon solvant des monomères et ne doit pas faire précipiter le polymère formé comme c'est le cas de certains alcools.

Le solvant le plus couramment utilisé est l'acétone (voir par exemple les brevets FR 1 532 053 ou FR 2 202 515). Cependant, les contraintes en matière de sécurité et de transport incitent un grand nombre de producteurs à commercialiser des produits sans point d'éclair. Il est évidemment possible, si la formulation tensio-active a été soigneusement sélectionnée, de distiller le solvant ayant servi à la copolymérisation. Mais ceci, d'une part, diminue la productivité et, d'autre part, confère à l'émulsion une mauvaise stabilité dans le temps.

L'emploi de solvants non inflammables tels que l'éthylène glycol, le propylène glycol et leurs dérivés est décrit dans le brevet FR 2 175 332, mais ces composés présentent généralement un mauvais pouvoir solvant et doivent être associés à de l'acétone.

Dans certaines émulsions fluorés du commerce, I'acétone a été remplacée par d'excellents solvants à haut point d'éclair tels que la N-méthyl pyrrolidone ou la γ-butyrolactone.

L'emploi de diols lourds tels que dipropylène glycol, pentanediol, hexanediol et tripropylène glycol pour obtenir des émulsions acryliques fluorées sans point d'éclair est décrit dans la demande de brevet JP 60-40182. Cependant, il s'avère que de telles émulsions présentent plusieurs défauts liés à la faible volatilité des solvants :
. séchage difficile des articles textiles et cuir qu'il n'est pas possible de porter à haute température,
. défaut de réticulation du copolymère sur textiles, dû au séchage incomplet du solvant et à la présence de groupements hydroxyle résiduaires.

La demande de brevet JP 05-263 070 préconise l'utilisation d'éthers de glycol tels que les di et tripropylène glycol monométhyl éthers, le diéthylène glycol monométhyl éther acétate, le triéthylène glycol diméthyl éther, le pentaéthylène glycol monobutyl éther et le diglyme. Ces solvants présentent des points d'ébullition élevés, des indices de volatilité faibles, et les défauts de séchage et de réticulation cités ci-dessus.

Pour éviter ces défauts, il apparaît souhaitable de travailler avec des solvants à indice d'évaporation ≧ 30 (Acétate de butyle = 100) s'éliminant en même temps que l'eau lors du séchage. Or, il se trouve que les meilleurs solvants ayant cette propriété présentent un point d'éclair aux environs de 40°C.

Il a maintenant été trouvé que les éthers de propylène glycol de formule : 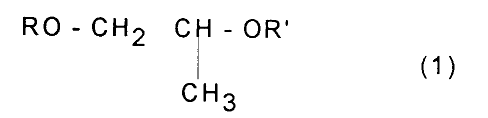
dans laquelle R représente un radical alkyle, linéaire ou ramifié, contenant de 1 à 4 atomes de carbone et R' représente un atome d'hydrogène ou un reste acyle contenant 2 à 4 atomes de carbone, permettent d'obtenir des émulsions aqueuses de copolymères fluorés sans leur conférer de point d'éclair. Bien que ces éthers et leurs mélanges avec l'eau présentent un point d'éclair, on a constaté de façon surprenante que les émulsions aqueuses de copolymères fluorés obtenues avec ces éthers ne présentent pas de point d'éclair jusqu'à 100°C.

L'invention a donc pour objet un procédé de préparation d'émulsions aqueuses de copolymères fluorés à base de monomères acryliques polyfluorés et de monomères non fluorés par copolymérisation en émulsion aqueuse en présence d'un solvant organique, caractérisé en ce que l'on utilise comme solvant organique un éther de formule (1) ci-dessus.

Comme exemples d'éthers de propylène glycol selon l'invention, on peut mentionner le méthoxypropanol, I'éthoxypropanol, l'isobutoxypropanol et l'acétate de méthoxypropanol.

Parmi les éthers de formule ci-dessus, on préfère utiliser le méthoxypropanol (R = CH₃, R' = H), qui présente l'avantage de former un azéotrope avec l'eau et s'élimine donc, en même temps que l'eau, lors du séchage, en formant un film de copolymère sec et non collant. Cette caractéristique évite le phénomène d'encrassement des rouleaux lors du foulardage des textiles.

Comme exemples non limitatifs de monomères acryliques polyfluorés utili sables dans le cadre de la présente invention, on peut mentionner ceux répondant aux formules : 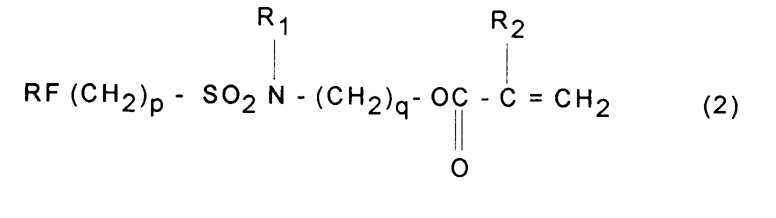 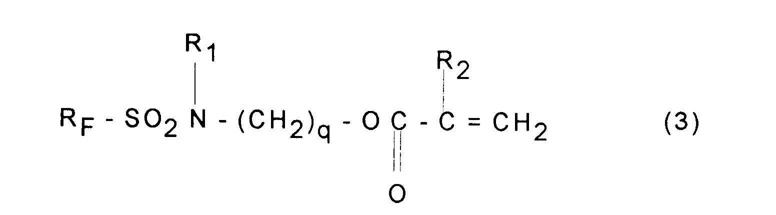 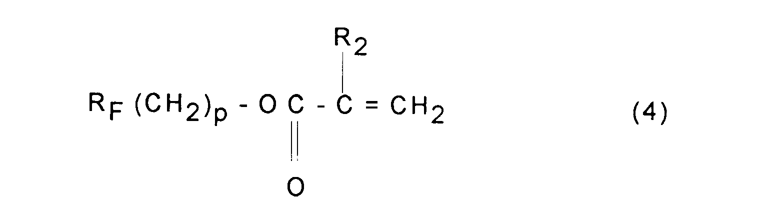
dans lesquelles R_{F} représente un radical perfluoré à chaîne droite ou ramifiée de 4 à 16 atomes de carbone, p et q, identiques ou différents, représentent chacun un nombre entier allant de 1 à 4, R₁ représente un radical alkyle, linéaire ou ramifié, contenant de 1 à 4 atomes de carbone, et R₂ représente un atome d'hydrogène ou un radical méthyle.

La proportion de monomères acryliques polyfluorés dans le copolymère peut aller de 40 à 90 % en poids.

Les principaux comonomères non fluorés sont généralement des acrylates ou méthacrylates d'alkyle tels que, par exemple, le méthacrylate de butyle, le méthacrylate d'éthyl-2 hexyle et les acrylates et méthacrylates de stéaryle et de béhényle, des acrylates et méthacrylates porteurs d'enchaînement oxyéthylé comme le méthacrylate d'éthyl triglycol, des monomères vinyliques comme les chlorures de vinyle et de vinylidène, I'acétate de vinyle.

Des comonomères spéciaux peuvent également être utilisés pour fonctionnaliser le copolymère. A ce titre, on peut citer les méthacrylates et acrylates de N,N-diméthylaminoéthyle ou de N-tertiobutylaminoéthyle, les acides acrylique et méthacrylique, les monomères porteurs de groupe acide sulfonique ou hydroxyle tels que les acrylates et méthacrylates d'hydroxyéthyle ou hydroxypropyle.

Des agents réticulants sont généralement utilisés pour fixer le copolymère sur le support et le rendre insoluble dans les solvants. Il s'agit de dérivés d'acrylamide comme le N-méthylolacrylamide et le N-méthylolméthacrylamide, ou d'acrylate ou de méthacrylate de chloro hydroxy propyle.

La copolymérisation en émulsion est réalisée en présence de tensio-actifs anioniques ou cationiques associés ou non à des tensio-actifs non ioniques.

Les masses moléculaires sont réglées à l'aide d'agents de transfert de chaîne tels que des mercaptans ou par la technique d'introduction des monomères.

La copolymérisation peut être amorcée entre 50 et 90°C au moyen d'initiateurs de type peroxyde (comme l'eau oxygénée) ou persels (comme les persulfates) ou du type azo tel que l'acide 4,4' azo bis (cyano-4 pentanoïque) ou le chlorhydrate d'azo-bis (amidino propane).

La quantité d'éther (1) à utiliser peut varier dans de larges limites et est généralement comprise entre 10 et 80 parties en poids pour 100 parties du total des monomères. Cependant, un autre avantage des éthers (1) selon l'invention réside dans le fait que la quantité d'éther nécessaire pour une bonne mise en émulsion (20 à 50 parties) est deux à trois fois plus faible que celle requise avec les solvants usuels de l'art antérieur (80 à 100 parties). Le rapport pondéral eau/éther peut aller de 1 à 5 et est de préférence compris entre 1,5 et 5. Les éthers selon l'invention permettent ainsi l'obtention d'émulsions à haut taux de matière active sans qu'il soit nécessaire de faire appel à des moyens énergiques de mise en émulsion, comme les ultra-sons ou les homogénéiseurs du type Manton-Gaulin .

Les émulsions de copolymères fluorés selon l'invention peuvent être utilisées pour le traitement hydrophobe et oléophobe d'une grande variété de supports, tels que textiles, cuirs, papiers, matériaux de construction. Leur application peut être réalisée, après dilution à l'eau, par foulardage, trempage, enduction ou pulvérisation. Elles peuvent être formulées avec différents additifs, tels que : résines de fixation, catalyseurs, anti-statiques, anti-mousses, ou fongicides.

Les exemples suivants illustrent l'invention, sans la limiter. Sauf indication contraire, les parties et pourcentages sont exprimés en poids.

### EXEMPLE 1

a) Dans un réacteur de 1.000 parties en volume, chauffé par une double enveloppe thermostatée, muni d'une agitation ancre et d'un réfrigérant à reflux, on introduit :
   - 157 parties d'eau déminéralisée
   - 59 parties de 1-méthoxy 2-propanol
   - 8,6 parties de chlorure de triméthyloléylammonium
   - 8 parties d'un mélange d'alkylphénols oxyéthylés de HLB15
   - 160,5 parties d'un mélange d'acrylates polyfluorés de formule : 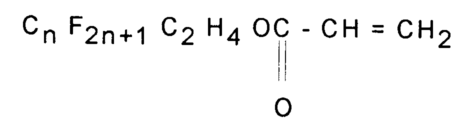 où n est égal à 8,10, 12 et 14 dans des rapports respectifs en poids de 63:25:10:2.
   - 52 parties de méthacrylate de stéaryle
   - 8 parties de N-méthylol acrylamide
   - 0,5 parties de n-dodécylmercaptan.

   Après inertage à l'azote et chauffage à 65°C, on initie la polymérisation par 1,6 parties de chlorhydrate d'azo bis (amidino propane). Après 3 heures de chauffage à 80°C, on obtient 450 parties d'une émulsion (A) à 48 % de taux de matière sèche, qui ne présente pas de point d'éclair entre 0 et 100°C, en coupe fermée (selon la méthode Sétaflash NF.T.300.50).
b) A titre comparatif, on a préparé une émulsion (B) en opérant comme précédemment, mais en remplaçant le méthoxy propanol par un mélange 80/20 de propylène glycol et de N-méthylpyrrolidone.
   Pour pouvoir polymériser correctement et obtenir une émulsion stable, il a été nécessaire d'employer environ trois fois plus (160 parties) de ce mélange que de méthoxy propanol.
c) Chaque émulsion (A) et (B) est diluée à 4 g de produit sec par litre d'eau et appliquée par foulardage sur textiles synthétiques.

Après séchage et thermofixation pendant 40 secondes à 155°C, les propriétés hydrophobes et oléophobes des tissus sont testées selon des méthodes normalisées :
- Spray-test: AATCC 22.74
- Oléophobie: AATCC 118.75

Bundesmann: ISO 9865 avec un temps d'arrosage de 10 minutes.

Les deux émulsions (A) et (B) appliquées sur tissu de polyester et tissu de polyamide à brins fins ont donné les résultats suivants :

| | | | | **Bundesmann** | | | |
|---|---|---|---|---|---|---|---|
| Tissu | Emulsion appliquée | Spray-test | Oléophobie | Aspect | % d'eau absorbée | ml d'eau traversée | |
| Polyester | Néant (tissu non traité | 0 | 0 | 1 | 43 | 405 | |
| | A selon l'invention | 100 | 6 | 5 | 4,4 | 7 | |
| | B comparative | 90 | 4 | 3 | 13 | 9 | |
| Polyamide | Néant (tissu non traité) | 0 | 0 | 1 | 33 | 175 | |
| | A selon l'invention | 100 | 2 | 4 | 11 | 12 | |
| Brins fins | B comparative | 90 | 2 | 4 | 12 | 15 | |

### EXEMPLE 2

Dans le même réacteur qu'à l'exemple 1, on introduit successivement :
- 350 parties d'eau déminéralisée
- 90 parties de méthoxy propanol
- 0,75 partie de borax
- 5 parties de bis-tridécylsulfosuccinate de sodium,
- 3,5 parties de N-méthylol acrylamide
- 90 parties d'une solution à 80 % dans l'acétone d'un mélange d'acrylates polyfluorés de formule : 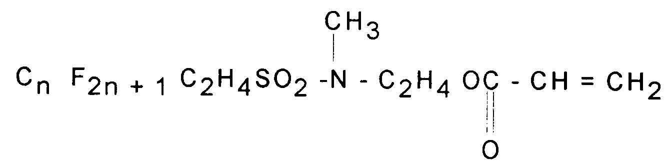 dans laquelle n est égal à 6, 8, 10, 12, et 14 dans des rapports respectifs en poids de 55/35/8/1,5/0,5.
- 20 parties de méthacrylate de butyle
- 93 parties de méthacrylate d'heptyle
- 0,25 partie de n-dodécyl mercaptan.

Après inertage à l'azote et chauffage à 80°C, la polymérisation est initiée par 0,5 parties de persulfate de potassium. Lors de la phase exothermique de la réaction, I'acétone qui distille n'est pas recyclée dans l'émulsion. Après 3 heures à 85°C on obtient une émulsion (C) blanchâtre à 30 % de matière sèche, qui ne présente pas de point d'éclair.

Cette émulsion (C) est diluée à l'eau de façon à obtenir deux émulsions diluées (C1) et (C2) contenant respectivement 3,75 et 5 % de matière sèche, qui sont appliquées sur cuir vachette pleine fleur tanné végétal, à raison de 200 g/m2. On laisse sécher une nuit à température ambiante avant de procéder aux tests suivants:

*Test de résistance à l'eau (RE)* : consiste à mesurer le temps de pénétration d'une goutte d'eau de 50 µl déposée sur le cuir.

*Test de résistance à l'huile (RH)* : consiste à mesurer le temps de pénétration d'une goutte de vaseline déposée sur le cuir.

*Test d'hydrophobie* : l'effet hydrophobe est mesuré à l'aide de solutions-test numérotées de 1 à 10 et constituées par des mélanges eau/isopropanol dans les proportions pondérales suivantes :

| ***Solution-test*** | ***Eau*** | ***Isopropanol*** |
|---|---|---|
| 1 | 90 | 10 |
| 2 | 80 | 20 |
| 3 | 70 | 30 |
| 4 | 60 | 40 |
| 5 | 50 | 50 |
| 6 | 40 | 60 |
| 7 | 30 | 70 |
| 8 | 20 | 80 |
| 9 | 10 | 90 |
| 10 | 0 | 100 |

Le test consiste à déposer sur les substrats traités des gouttes de ces mélanges, puis à observer l'effet produit. On cote, en donnant pour valeur, le numéro correspondant à la solution qui contient le plus fort pourcentage d'isopropanol et qui n a pas pénétré ou mouillé le substrat après 30 secondes de contact.

Le tableau suivant rassemble les résultats obtenus :

| | ***RE*** | ***RH*** | ***HYDROPHOBIE*** |
|---|---|---|---|
| Cuir non traité | 5 mn | 10 mn | 1 |
| Cuir traité avec C1 | 6 heures | > 8 heures | 6 |
| Cuir traité avec C2 | 8 heures | > 30 heures | 7 |

## Revendications

1. Procédé de préparation d'émulsions aqueuses de copolymères à base de monomères acryliques polyfluorés et de monomères non fluorés par copolymérisation en émulsion aqueuse en présence d'un solvant organique, caractérisé en ce que l'on utilise comme solvant organique un éther de propylène glycol de formule : 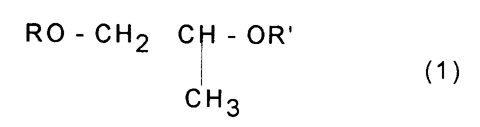 dans laquelle R représente un radical alkyle, linéaire ou ramifié, contenant de 1 à 4 atomes de carbone et R' représente un atome d'hydrogène ou un radical acyle contenant de 2 à 4 atomes de carbone.

2. Procédé selon la revendication 1 dans lequel l'éther est le 1-méthoxy 2-propanol.

3. Procédé selon la revendication 1 ou 2 dans lequel on utilise 20 à 50 parties en poids d'éther pour 100 parties en poids du total des monomères.

4. Procédé selon l'une des revendications 1 à 3 dans lequel le rapport pondéral eau/éther est compris entre 1 et 5, de préférence entre 1,5 et 5.
